# EUROPÄISCHE PATENTSCHRIFT

(11) **EP 2 748 217 B1**
(45) Veröffentlichungstag und Bekanntmachung des Hinweises auf die Patenterteilung: **09.10.2019**
(21) Anmeldenummer: 12751332.3
(22) Anmeldetag: 24.08.2012
(51) Int. Cl.: C08G 18/00, C08G 18/58, C09J 175/04, C09J 183/00, C09J 163/00

(54) **HÄRTER FÜR FEUCHTIGKEITSHÄRTENDE ZUSAMMENSETZUNGEN**
HARDENER FOR MOISTURE CURABLE COMPOSITIONS
DURCISSEUR POUR COMPOSITIONS DURCISSANT À L'HUMIDITÉ

(30) Priorität: 26.08.2011 EP 11179080
(43) Veröffentlichungstag der Anmeldung: 02.07.2014
(73) Patentinhaber: Sika Technology AG, 6340 Baar (CH)
(72) Erfinder: BURCKHARDT, Urs, CH-8049 Zürich (CH); KELCH, Steffen, CH-8102 Oberengstringen (CH); WOLF, Ulrich, CH-7031 Laax (CH)
(74) Vertreter: Sika Patent Attorneys
(86) Internationale Anmeldenummer: PCT/EP2012/066553
(87) Internationale Veröffentlichungsnummer: WO 2013/030136

(56) Entgegenhaltungen:
- WO-A1-03/044094
- GB-A- 1 097 880
- JP-A- 2001 261 784
- US-A- 3 020 250
- US-A- 4 436 848
- US-A- 5 314 971
- US-A- 5 908 358

## Beschreibung

### Technisches Gebiet

Die Erfindung betrifft einen Härter für feuchtigkeitshärtende Zusammensetzungen, wie sie typischerweise im Bereich der Klebstoffe, Dichtstoffe oder Beschichtungen eingesetzt werden.

### Stand der Technik

Es ist bekannt, die Aushärtung von feuchtigkeitshärtenden Zusammensetzungen dadurch zu beschleunigen, dass dieser bei der Applikation eine Komponente zugemischt wird, welche Wasser in freier oder gebundener Form enthält. Beispiele für solche wasserhaltigen Komponenten finden sich beispielsweise in US4469857, EP0371370, US5194488 oder WO03/044094 und WO03/059978. In den dort beschriebenen Komponenten ist das Wasser jeweils an ein Trägermaterial gebunden. Die verwendeten Trägermaterialien, welche in der Regel einen ionischen oder zumindest stark polaren Charakter aufweisen, sind aber mit der Matrix der feuchtigkeitshärtenden Zusammensetzungen, zu deren Beschleunigung sie eingemischt werden, oft nur ungenügend verträglich. Folglich erschwert sich das Einbringen des Härters in die feuchtigkeitshärtende Zusammensetzung und es kann zu Inhomogenitäten innerhalb der Zusammensetzung kommen. Dadurch können einerseits die Applikationseigenschaften der Zusammensetzung beeinträchtigt werden, andererseits kann diese Unverträglichkeit eine Verminderung der Festigkeit oder Beständigkeit der ausgehärteten Zusammensetzung mit sich bringen. Bei einigen Trägermaterialien erfolgt zudem die Freisetzung des Wassers vom Trägermaterial schleppend oder findet erst bei erhöhter Temperatur statt, was die Aushärtungsgeschwindigkeit bei Umgebungstemperatur stark verlangsamen kann.

### Darstellung der Erfindung

Aufgabe der vorliegenden Erfindung ist es daher, einen Härter bereitzustellen, mit dessen Hilfe eine feuchtigkeitshärtende Zusammensetzung beschleunigt aushärtet und dabei rasch Festigkeit aufbaut, und zwar weitgehend unabhängig von den äusseren Bedingungen der Applikation, der Substrate und der Klebegeometrie. Der Härter soll dabei die Zusammensetzung weder in ihren Applikations- noch in den Gebrauchseigenschaften nach der Aushärtung beeinträchtigen.

Erfindungsgemäss wird diese Aufgabe durch einen Härter gemäss Anspruch 1 gelöst.

Überraschenderweise wurde gefunden, dass die Kombination einer feuchtigkeitshärtenden Zusammensetzung in einem nichtwässrigen System mit einem Härter auf der Basis einer wässrigen Emulsion von mindestens einem Epoxidharz zu keinerlei Verträglichkeitsproblemen führt, welche Entmischung und makroskopische Phasentrennung verursachen könnten. Stattdessen zeichnen sich mittels erfindungsgemässen Härters ausgehärtete Zusammensetzungen durch gute mechanische Eigenschaften aus.

Weiterhin hat sich überraschenderweise gezeigt, dass der erfindungsgemässe Härter mit weiteren Bestandteilen wie Rheologiehilfsmitteln und Füllstoffen angereichert werden kann, ohne dass seine Lagerstabilität beeinträchtigt wird. Ferner hat sich gezeigt, dass sich die Applikationseigenschaften der feuchtigkeitshärtenden Zusammensetzung infolge des Zumischens des Härters nicht wie erwartet verschlechtern, sondern im Gegenteil gar verbessern, indem eine bessere Standfestigkeit und ein kürzerer Fadenzug beobachtet werden.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Die vorliegende Erfindung betrifft einen Härter für feuchtigkeitshärtende Zusammensetzungen umfassend mindestens eine wässrige Emulsion von mindestens einem Epoxidharz.

Mit "Poly" beginnende Substanznamen wie Polyol oder Polyisocyanat bezeichnen im vorliegenden Dokument Substanzen, die formal zwei oder mehr der in ihrem Namen vorkommenden funktionellen Gruppen pro Molekül enthalten. Der Begriff "Polymer" umfasst im vorliegenden Dokument einerseits ein Kollektiv von chemisch einheitlichen, sich aber in Bezug auf Polymerisationsgrad, Molmasse und Kettenlänge unterscheidenden Makromolekülen, das durch eine Polyreaktion (Polymerisation, Polyaddition, Polykondensation) hergestellt wurde. Der Begriff umfasst andererseits auch Derivate eines solchen Kollektivs von Makromolekülen aus Polyreaktionen, Verbindungen also, die durch Umsetzungen, wie beispielsweise Additionen oder Substitutionen, von funktionellen Gruppen an vorgegebenen Makromolekülen erhalten wurden und die chemisch einheitlich oder chemisch uneinheitlich sein können. Der Begriff umfasst wieterhin auch so genannte Prepolymere, das heisst reaktive oligomere Voraddukte, deren funktionelle Gruppen am Aufbau von Makromolekülen beteiligt sind.

Der Begriff "Polyurethanpolymer" umfasst sämtliche Polymere, welche nach dem so genannten Diisocyanat-Polyadditions-Verfahren hergestellt werden. Dies schliesst auch solche Polymere ein, die nahezu oder gänzlich frei sind von Urethangruppen. Beispiele für Polyurethanpolymere sind Polyether-Polyurethane, Polyester-Polyurethane, Polyether-Polyharnstoffe, Polyharnstoffe, Polyester-Polyharnstoffe, Polyisocyanurate und Polycarbodiimide.

Im vorliegenden Dokument bezeichnen die Terme "Silan" bzw. "Organosilan" Verbindungen, welche einerseits mindestens eine, üblicherweise zwei oder drei, über Si-O-Bindungen, direkt an das Siliciumatom gebundene Alkoxygruppen oder Acyloxygruppen aufweisen, und andererseits mindestens einen, über eine Si-C-Bindung, direkt an das Siliciumatom gebundenen organischen Rest aufweisen. Derartige Silane sind dem Fachmann auch als Organoalkoxysilane bzw. Organoacyloxysilane bekannt.

Entsprechend bezeichnet der Begriff "Silangruppe" die an den, über die Si-C-Bindung gebundenen, organischen Rest des Silans gebundene siliciumhaltige Gruppe. Die Silane, beziehungsweise deren Silangruppen, haben die Eigenschaft, bei Kontakt mit Feuchtigkeit zu hydrolysieren. Dabei bilden sich Organosilanole, das heisst siliciumorganische Verbindungen enthaltend eine oder mehrere Silanolgruppen (Si-OH-Gruppen) und, durch nachfolgende Kondensationsreaktionen, Organosiloxane, das heisst siliciumorganische Verbindungen enthaltend eine oder mehrere Siloxangruppen (Si-O-Si-Gruppen). Der Begriff "silanfunktionell" bezeichnet Verbindungen, die Silangruppen aufweisen. "Silanfunktionelle Polymere" sind demnach Polymere, welche mindestens eine Silangruppe aufweisen.

Als "Aminosilane" bzw. "Mercaptosilane" werden Organosilane bezeichnet, deren organischer Rest eine Aminogruppe bzw. eine Mercaptogruppe aufweist. Als "primäre Aminosilane" werden Aminosilane bezeichnet, welche eine primäre Aminogruppe aufweisen, also eine NH₂-Gruppe, die an einen organischen Rest gebunden ist. Als "sekundäre Aminosilane" werden Aminosilane bezeichnet, welche eine sekundäre Aminogruppe aufweisen, also eine NH-Gruppe, die an zwei organische Reste gebunden ist.

Unter "Molekulargewicht" versteht man im vorliegenden Dokument stets das Molekulargewichtsmittel Mₙ (Zahlenmittel).

Als "Raumtemperatur" wird im vorliegenden Dokument eine Temperatur von 23°C bezeichnet.

Der erfindungsgemässe Härter umfasst mindestens eine wässrige Emulsion von mindestens einem Epoxidharz.

Das Epoxidharz stellt vorzugsweise ein Flüssigharz dar. Bevorzugte Epoxid-Flüssigharze weisen die Formel (I) auf.

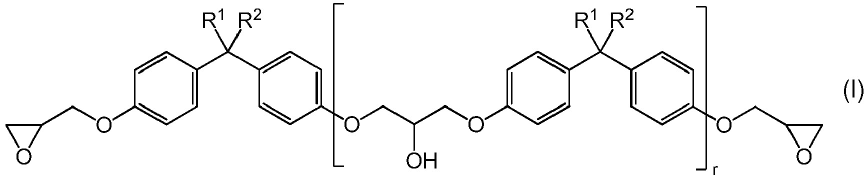

Hierbei stehen die Substituenten R¹ und R² unabhängig voneinander entweder für H oder CH₃. Weiterhin steht der Index r für einen Wert von 0 bis 1. Bevorzugt steht r für einen Wert von ≤ 0.2.

Es handelt sich somit vorzugsweise um Diglycidylether von Bisphenol A (DGEBA), von Bisphenol F sowie von Bisphenol A/F. Die Bezeichnung "A/F" verweist hierbei auf eine Mischung von Aceton mit Formaldehyd, welche als Edukt bei der Herstellung von Bisphenol A/F verwendet wird. Geeignete Flüssigharze sind beispielsweise unter den Handelsnamen Araldite® GY 250, Araldite® GY 282, Araldite® PY 304 von Huntsman International LLC, USA, oder D.E.R.® 330 oder D.E.R.® 331 von Dow Chemical Company, USA, oder unter dem Handelsnamen Epikote® 828 oder Epikote® 862 von Hexion Specialty Chemicals Inc, USA, kommerziell erhältlich.

Das Epoxidharz liegt typischerweise in unmodifizierter Form vor. Insbesondere ist es nicht hinsichtlich besserer Emulgierbarkeit modifiziert, beispielsweise mit einer Fettsäure.

Die wässrige Emulsion von mindestens einem Epoxidharz enthält optional mindestens einen Reaktivverdünner. Als Reaktivverdünner eignen sich insbesondere monofunktionelle Epoxide, bevorzugt glycidylisierte Fettalkohole.

Bevorzugt enthält die Emulsion weiterhin mindestens einen externen Emulgator, insbesondere einen nichtionischen Emulgator, beispielsweise ein Fettalkoholethoxylat.

Bevorzugt weist die Emulsion einen Gehalt an Emulgator von ≤ 10 Gew.-%, insbesondere ≤ 5 Gew.-%, auf.

Die Emulsion weist vorzugsweise einen Feststoffgehalt von 60 bis 90 Gew.-%, insbesondere von 70 bis 90 Gew.-%, bevorzugt von 75 bis 85%, auf. Entsprechend weist die wässrige Emulsion von mindestens einem Epoxidharz insbesondere etwa 10 bis 40 Gew.-%, insbesondere 10 bis 30 Gew.-%, bevorzugt 15 bis 25 Gew.-%, Wasser auf.

Die mittlere Teilchengrösse (Tröpfchendurchmesser) der Emulsion liegt insbesondere im Bereich von 0.05 bis 10 µm, insbesondere von 0.1 bis 7 µm, besonders bevorzugt von 0.2 bis 5 µm. Die Emulsion weist dabei bevorzugt eine enge Teilchengrössenverteilung auf, wobei das Grössenverhältnis der grössten zu den kleinsten Partikeln einen Wert im Bereich von ≤ 25, bevorzugt ≤ 20, aufweist. Insbesondere ist die Teilchengrössenverteilung derart, dass 90% der Teilchen in der Emulsion kleiner sind als 6 µm, bevorzugt kleiner als 4 µm, besonders bevorzugt kleiner als 3 µm.

Durch die geringe mittlere Teilchengrösse und die enge Teilchengrössenverteilung zeigt die Emulsion eine geringe Neigung zum Aufrahmen oder Absetzen und ist damit lange lagerfähig.

Die Herstellung der Emulsion erfolgt bevorzugt in einem kontinuierlichen Verfahren, insbesondere mittels Stator-Rotor-Mischer. Ein solches Verfahren ist dem Fachmann bekannt. Die Vorteile dieses Herstellverfahrens liegen insbesondere darin, dass die Emulsion auch bei relativ hoher Viskosität des Epoxidharzes ohne Zusatz von Lösemitteln herstellbar ist.

Weiterhin vorteilhaft ist, dass durch die Fahrweise nahe am Phaseninversionspunkt hohe bis sehr hohe Feststoffgehalte bei kleinen, eng verteilten Teilchengrössen möglich sind, wodurch Emulsionen mit besonders hohen Lagerstabilitäten erhalten werden.

Weitere Vorteile des beschriebenen Verfahrens liegen darin, dass sich die Emulsion durch das Verfahren nur wenig erhitzt und dass sie kostengünstig hergestellt werden kann.

Bevorzugt erfolgt die Herstellung ohne Zusatz von Lösemitteln.

Weiterhin betrifft die vorliegende Erfindung die Verwendung einer wässrigen Emulsion von mindestens einem Epoxidharz als Härter für feuchtigkeitshärtende Zusammensetzungen, insbesondere für feuchtigkeitshärtende Klebstoffe, Dichtstoffe oder Beschichtungen.

Bei den feuchtigkeitshärtenden Zusammensetzungen handelt es sich insbesondere um Zusammensetzungen auf Basis von Isocyanatgruppen aufweisenden Polyurethanpolymeren oder um Zusammensetzungen auf Basis von silanfunktionellen Polymeren.

Weiterhin betrifft die vorliegende Erfindung ein Verfahren zur zumindest teilweisen Aushärtung einer feuchtigkeitshärtenden Zusammensetzung, wobei die feuchtigkeitshärtende Zusammensetzung mit dem Härter gemäss vorhergehender Beschreibung vermischt wird.

Die vorliegende Erfindung betrifft weiterhin eine zweikomponentige Zusammensetzung bestehend aus einer Komponente **A** umfassend
- mindestens eine feuchtigkeitshärtende Zusammensetzung, und einer Komponente **B** umfassend
- mindestens einen Härter, wie er vorhergehend beschrieben worden ist.

Die feuchtigkeitshärtende Zusammensetzung, welche in Komponente **A** enthalten ist, umfasst mindestens ein vernetzungsfähiges Polymer, welches, gegebenenfalls unter Anwesenheit weiterer Bestandteile wie Vernetzer, Katalysatoren und dergleichen, durch Kontakt mit Wasser vernetzt werden kann.

In einer Ausführungsform der Erfindung handelt es sich beim vernetzungsfähigen Polymer um ein Isocyanatgruppen aufweisendes Polyurethanpolymer, welches insbesondere durch die Umsetzung von mindestens einem Polyol mit mindestens einem Polyisocyanat erhältlich ist.

Als Polyol geeignet sind insbesondere Polyetherpolyole, Polyesterpolyole, Polycarbonatpolyole, Polyacrylatpolyole und Kohlenwasserstoffpolyole, bevorzugt Polyetherpolyole. Bevorzugte Polyetherpolyole sind Polyoxypropylenpolyole und Polyoxypropylenpolyoxyethylenpolyole, insbesondere die Di- und Triole. Als Polyisocyanat geeignet sind insbesondere Diisocyanate. Bevorzugte Diisocyanate sind 1,6-Hexamethylendiisocyanat (HDI), 1-Isocyanato-3,3,5-trimethyl-5-isocyanatomethyl-cyclohexan (Isophorondiisocyanat oder IPDI), Perhydro-2,4'- und -4,4'-diphenylmethandiisocyanat (HMDI oder H₁₂MDI), 2,4- und 2,6-Toluylendiisocyanat und beliebige Gemische dieser Isomeren (TDI) sowie 4,4'-, 2,4'- und 2,2'-Diphenylmethandiisocyanat und beliebige Gemische dieser Isomeren (MDI).

Das Polyurethanpolymer wird auf bekannte Art und Weise hergestellt. Es weist ein Molekulargewicht von 500 bis 50'000 g/mol, bevorzugt zwischen 1000 und 30'000 g/mol, auf. Weiterhin weist das Polyurethanpolymer bevorzugt eine mittlere NCO-Funktionalität von 1.8 bis 3 auf.

In einer weiteren Ausführungsform der Erfindung handelt es sich beim vernetzungsfähigen Polymer um ein silanfunktionelles Polymer, insbesondere um einen silanterminierten Polyether, ein silanterminiertes Poly(meth)acrylat oder um ein silanterminiertes Polyurethan. Derartige Polymere sind insbesondere erhältlich durch Umsetzung eines Polyols mit einem Isocyanatosilan, durch Umsetzung eines Isocyanatgruppen aufweisenden Prepolymers mit einem Amino-, Hydroxy- oder Mercaptosilan, durch Umsetzung eines Polyamins mit einem (Meth)acrylsilan oder durch Umsetzung eines (Meth)acryl terminierten Polymers mit einem Amino- oder Mercaptosilan.

Ein bevorzugtes silanfunktionelles Polymer ist das Umsetzungsprodukt eines, gegebenenfalls kettenverlängerten, Isocyanatgruppen terminierten Polymers mit einem Aminosilan, insbesondere einem sekundären Aminosilan. Für diese Umsetzung bevorzugte sekundare Aminosilane sind Alkylaminosilane, beispielsweise ein 3-(n-Butylamino)propyl-alkoxysilan oder ein Bis(alkoxysilylpropyl)amin und insbesondere Michael-Addukte von primären Aminosilanen mit Michael-Akzeptoren wie Acrylnitril, (Meth)acrylaten und Maleinsäureestern und -amiden. Bevorzugte Michael-Addukte sind die Umsetzungsprodukte von primären Aminosilanen, insbesondere 3-Aminopropylalkoxysilanen, mit Acrylaten, beispielsweise n-Butylacrylat oder Isobornylacrylat, und insbesondere Maleinsäuredialkylestern. Am meisten bevorzugt sind die Michael-Addukte von 3-Aminopropyl-dialkoxyalkylsilanen oder 3-Aminopropyltrialkoxysilanen mit Maleinsäuredialkylestern, insbesondere Maleinsäurediethylester.

Die Silangruppen sind insbesondere Dialkoxyalkylsilangruppen und bevorzugt Trialkoxysilangruppen. Bevorzugte Alkoxygruppen an den Silangruppen sind Ethoxygruppen und insbesondere Methoxygruppen.

Beispielsweise sind geeignete silanfunktionelle Polymere kommerziell erhältlich unter den Handelsnamen Polymer ST, beispielsweise Polymer ST50, von der Firma Hanse Chemie AG, Deutschland, sowie unter dem Handelsnamen Desmoseal®von der Firma Bayer MaterialScience AG, Deutschland.

Weitere geeignete silanfunktionelle Polymere sind kommerziell erhältlich unter den Handelsnamen SPUR+® 1010LM, 1015LM und 1050MM von der Firma Momentive Performance Materials Inc., USA, sowie unter den Handelsnamen Geniosil® STP-E15, STP-10 und STP-E35 von der Firma Wacker Chemie AG, Deutschland.

Ebenfalls geeignet sind silanfunktionelle Polymere wie sie kommerziell erhältlich sind unter den Handelsnamen MS Polymer™ S203H, S303H, S227, S810, MA903 und S943, Silyl™ SAX220, SAX350, SAX400 und SAX725, Silyl™ SAT350 und SAT400, sowie XMAP™ SA100S und SA310S von der Firma Kaneka Corp., Japan, sowie unter den Handelsnamen Excestar® S2410, S2420, S3430, S3630, W2450 und MSX931 von der Firma Asahi Glass Co, Ltd., Japan.

Die Komponenten **A** und **B** enthalten insbesondere weitere Bestandteile wie Füllstoffe und Verstärker, Pigmente, Weichmacher bzw. Verdünner, Härter und Vernetzer, Beschleuniger und Katalysatoren, Stabilisatoren, Haftvermittler, Rheologiehilfsmittel, Trocknungsmittel und dergleichen. Beim Einsatz derartiger weiterer Bestandteile ist darauf zu achten, dass diese untereinander sowie mit der jeweiligen Komponente verträglich sind und keine vorzeitigen Reaktionen, insbesondere mit dem vernetzungsfähigen Polymer bzw. mit dem Epoxidharz, eingehen.

Optional enthält die Komponente **A** weiterhin mindestens einen Härter oder Beschleuniger für die Aushärtung des Epoxidharzes.

Handelt es sich beim vernetzungsfähigen Polymer in Komponente **A** um ein Isocyanatgruppen aufweisendes Polyurethanpolymer, ist der Härter oder Beschleuniger für Epoxidharze insbesondere ein blockiertes Amin, typischerweise ein thermisch oder hydrolytisch freisetzbares Amin.

Handelt es sich beim vernetzungsfähigen Polymer in Komponente **A** um ein silanfunktionelles Polymer, ist der Härter oder Beschleuniger für Epoxidharze insbesondere ausgewählt ist aus tertiären Polyaminen, insbesondere Pentamethyldiethylentriamin, N,N-Dimethyl-N'-(dimethylaminopropyl)-1,3-propandiamin, Bis(2-dimethylaminoethyl)ether, Bis-(dimethylaminoethyl)-piperazin, N,N'-Dimethylpiperazin, 1,4-Diazabicyclo[2.2.2]octan; Mannich-Basen, insbesondere Dimethylaminomethylphenol, 2,4,6-Tris(dimethylaminomethyl)phenol und 2,4,6-Tris((3-(dimethylamino)propyl)-aminomethyl)phenol; sowie Imidazolen, insbesondere 1-Methylimidazol, 1-Ethylimidazol, 1-Vinylimidazol, 2-Methylimidazol, 2-Ethylimidazol, 2-Isopropylimidazol, 2-Heptadecylimidazol, 2-Ethyl-4-methylimidazol und 1-Benzyl-2-methylimidazol. Besonders bevorzugt sind die genannten Mannich-Basen.

Vorzugsweise beträgt der Anteil des optionalen Härters oder Beschleunigers für Epoxidharze 0.5 bis 15 Gew.-%, insbesondere 1 bis 10 Gew.-%, bezogen auf die Komponente **A.**

Als Komponente **A** der erfindungsgemässen Zusammensetzung können auch Zusammensetzungen eingesetzt werden, wie sie als einkomponentige, feuchtigkeitshärtende Zusammensetzungen auf Basis von Isocyanatgruppen aufweisenden Polyurethanpolymeren oder von silanfunktionellen Polymeren, insbesondere als Klebstoffe, Dichtstoffe oder Beschichtungen, verwendet werden. Derartige Zusammensetzungen sind beispielsweise unter den Handelsnamen Sikaflex® oder SikaBond® kommerziell erhältlich bei Sika Schweiz AG.

Die Komponente **B** enthält neben der wässrigen Emulsion von mindestens einem Epoxidharz weiterhin optional ein Silan, welches ausgewählt ist aus der Gruppe bestehend aus Epoxysilan, insbesondere 3-Glycidoxypropyldimethoxymethylsilan, 3-Glycidoxypropyl-trimethoxysilan oder 3-Glycidoxypropyl-triethoxysilan, (Meth)acrylsilan, insbesondere 3-Methacryloxypropyltrimethoxysilan, und Anhydridosilan, insbesondere (Trimethoxysilyl)propyl-bernsteinsäureanhydrid oder 3-(Triethoxysilyl)propylbernsteinsäureanhydrid. Bevorzugt handelt es sich beim Silan in der Komponente **B** um ein Epoxysilan oder um ein (Meth)acrylsilan.

Der Einsatz eines solchen Silans in der Komponente **B** der erfindungsgemässen Zusammensetzung kann nach dem Vermischen der Komponenten eine verbesserte Verträglichkeit der unterschiedlichen Phasen.

Handelt es sich beim vernetzungsfähigen Polymer in Komponente **A** um ein silanfunktionelles Polymer, kann das Silan auch eine kovalente Verknüpfung des silanfunktionellen Polymers mit dem Epoxidharz bewirken.

Handelt es sich beim vernetzungsfähigen Polymer in Komponente **A** um ein Isocyanatgruppen aufweisendes Polyurethanpolymer, kann diese kovalente Verknüpfung durch den Einsatz blockierter Amine bewirkt werden.

Weiterhin enthält die Komponente **B** optional insbesondere ein Rheologiehilfsmittel oder einen Füllstoff, insbesondere pyrogene Kieselsäuren und Harnstoffe.

Die Komponente **A** der vorhergehend beschriebenen zweikomponentigen Zusammensetzung wird unter Ausschluss von Feuchtigkeit hergestellt und aufbewahrt. In dieser Form ist die Komponente **A** lagerstabil, das heisst, sie kann unter Ausschluss von Feuchtigkeit in einer geeigneten Verpackung oder Anordnung über einen Zeitraum von mehreren Monaten bis zu einem Jahr und länger aufbewahrt werden, ohne dass sie sich in ihren Anwendungseigenschaften oder in ihren Eigenschaften nach der Aushärtung in einem für ihren Gebrauch relevanten Ausmass verändert.

Die Komponente **B** ist typischerweise auch bei atmosphärischen Bedingungen lagerstabil.

Die beiden Komponenten **A** und **B** werden bevorzugt bei Raumtemperatur in einem luftundurchlässigen Gebinde gelagert, wobei das Gebinde für die Komponente **A** insbesondere aus Kunststoff (Polyolefin) oder aus innenbeschichtetem Metall (Aluminium) besteht.

Unmittelbar vor oder bei der Applikation der zweikomponentigen Zusammensetzung werden die Komponenten **A** und **B,** beispielsweise durch Rühren, Kneten Walzen oder dergleichen, insbesondere jedoch über einen Statikmischer oder mit Hilfe eines dynamischen Mischers, miteinander vermischt. Dabei kommt die Komponente **A** in Kontakt mit dem Wasser der wässrigen Emulsion von mindestens einem Epoxidharz aus der Komponente **B,** was zu einer Vernetzung des vernetzungsfähigen Polymers in der Zusammensetzung führt.

Bei der Applikation der zweikomponentigen Zusammensetzung wird die Komponente **B** vorzugsweise in einem solchen Verhältnis zur Komponente **A** eingesetzt, dass mit dem in der Komponente **B** vorhandenen Wasser mindestens 50%, bevorzugt 100%, aller reaktiven Gruppen des vernetzungsfähigen Polymers in der gesamten zweikomponentigen Zusammensetzung umgesetzt werden können.

Insbesondere wird die erfindungsgemässe zweikomponentige Zusammensetzung so eingesetzt, dass das Gewichtsverhältnis der Komponente **A** zu Komponente **B** ≥ 1:1, insbesondere 100:0.5 bis 100:50, bevorzugt 100:0.5 bis 100:20, beträgt.

Der Kontakt der zweikomponentigen Zusammensetzung mit Wasser in Form von Luftfeuchtigkeit ist für die Aushärtung nicht zwingend nötig, kann diese aber ebenfalls begünstigen. Insbesondere kann die Nachhärtung der Zusammensetzung mittels Luftfeuchtigkeit verlaufen.

Die Aushärtung der zweikomponentigen Zusammensetzung erfolgt insbesondere bei Raumtemperatur. In gewissen Fällen kann es vorteilhaft sein, die teilgehärtete Zusammensetzung mit Hilfe von erhöhter Temperatur, beispielsweise im Bereich von 40 bis 100°C, nach- bzw. vollständig auszuhärten.

Insbesondere verläuft die Aushärtung der Zusammensetzung in der Art, dass einerseits eine ausreichende Topf- bzw. Offenzeit gewährleistet ist und andererseits die Aushärtung innerhalb eines Zeitraums von einigen Minuten bis zu wenigen Stunden soweit fortgeschritten ist, dass die Zusammensetzung weiter bearbeitet werden kann bzw. eine mit der Zusammensetzung ausgeführte Verklebung selbsttragend ist und transportiert werden kann.

Enthält die Komponente **A** der zweikomponentigen Zusammensetzung zusätzlich mindestens einen Härter oder Beschleuniger für Epoxidharze, kommt es bei der Vermischung der Komponente **A** und der Komponente **B** typischerweise auch zur Aushärtung des Epoxidharzes aus der Komponente **B.** Durch die Aushärtung des Epoxidharzes entwickelt die ausgehärtete Zusammensetzung eine deutlich erhöhte Festigkeit.

Der erfindungsgemässe Härter bzw. die erfindungsgemässe zweikomponentige Zusammensetzung wird bevorzugt eingesetzt für Klebe- und Abdichtungsanwendungen in der Bau- und Fertigungsindustrie sowie im Fahrzeugbau, insbesondere für die Fugenabdichtung, Parkettverklebung, Anbauteilverklebung, Nahtabdichtung, Hohlraumversiegelung, Montage, Karosserieverklebung, Scheibenverklebung, Dachabdichtung etc. Sie ist insbesondere dann vorteilhaft, wenn eine raschere Aushartung einer feuchtigkeitshärtenden Zusammensetzung als mittels Luftfeuchtigkeit allein gewünscht wird, beispielsweise wegen einer kurzen Taktzeit in einem Klebeprozess oder möglichst kurzer Wartezeit in einem Reparaturfall, wegen Verarbeitung unter ungünstigen klimatischen Bedingungen wie etwa Winter- oder Wüstenklima, wegen geringer Wasserdampfdurchlässigkeit der Zusammensetzung und/oder der Substrate, wegen dickschichtiger Klebefugen oder wegen einer für den Zutritt von Luftfeuchtigkeit ungünstigen Klebegeometrie.

Insbesondere eignen sich erfindungsgemässe zweikomponentige Zusammensetzungen zum Verkleben, Abdichten oder Beschichten von Substraten aus Beton, Mörtel, Backstein, Ziegel, Keramik, Gips, Naturstein wie Granit oder Marmor, Glas, Glaskeramik, Metall oder Metalllegierung wie Aluminium, Stahl, Buntmetall, verzinktes Metall, Holz, Kunststoff wie PVC, Polycarbonat, Polymethyl(meth)acrylat, Polyester, Epoxidharz, Kompositmaterialien, Farbe oder Lack.

Weiterhin betrifft die Erfindung eine gehärtete Zusammensetzung, wie sie erhältlich ist aus einer vorhergehend beschriebenen zweikomponentigen Zusammensetzung durch Mischen der Komponente **A** mit der Komponente **B.** Weiterhin betrifft die Erfindung einen Artikel, welcher eine zumindest teilweise gehärtete Zusammensetzung gemäss vorhergehender Beschreibung aufweist, wobei es sich bei diesem Artikel insbesondere um ein Bauwerk, ein Industriegut oder ein Transportmittel, oder ein Teil davon handelt.

Eine beispielhafte Aufzählung derartiger Artikel sind Häuser, Glasfassaden, Fenster, Bäder, Badezimmer, Küchen, Dächer, Brücken, Tunnels, Strassen, Automobile, Lastkraftwagen, Schienenfahrzeuge, Busse, Schiffe, Spiegel, Scheiben, Wannen, Weisswaren, Haushaltsapparate, Geschirrspüler, Waschmaschinen, Backöfen, Scheinwerfer, Nebelleuchter oder Solarpanels wie Photovoltaik- oder Solarthermie-Module.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

### Beschreibung der Messmethoden

Die **Viskosität** wurde auf einem thermostatisierten Kegel-Platten-Viskosimeter Physica UM (Kegeldurchmesser 20 mm, Kegelwinkel 1 °, Kegelspitze-PlattenAbstand 0.05 mm, Schergeschwindigkeit 10 bis 1000 s⁻¹) gemessen.

Die mittlere **Teilchengrösse** wurde mittels Laserbeugung auf einem Sympatec-Gerät mit Laserbeugungssensor HELOS gemessen.

Als Mass für die Applikationseigenschaften der Zusammensetzung wurden die Standfestigkeit und der Fadenzug herangezogen. Zur Bestimmung der **Standfestigkeit** wurde die Zusammensetzung mittels eines Holzspatels vertikal auf ein Stück Pappkarton appliziert und das Abfliessverhalten beobachtet. Die Standfestigkeit wurde als "gut" gewertet, wenn sich die Zusammensetzung innerhalb einer Minute ohne abzufliessen leicht nach unten geneigt hatte; als "sehr gut", wenn sie sich gar nicht bewegt hatte. Der **Fadenzug** wurde qualitativ bestimmt, indem die Zusammensetzung mittels Kartuschenpistole auf ein an der Wand befestigtes Stück Pappkarton aufgetragen wurde, die Kartuschenpistole beim Auftragsende durch rasches Zurückziehen weggezogen und die Länge des dabei an der Abrissstelle zurückbleibenden Fadens gemessen wurde.

Zur Messung der Zeit bis zur **Klebefreiheit** (Hautbildungszeit) wurde ein kleiner Teil der raumtemperaturwarmen Zusammensetzung in einer Schichtdicke von ca. 3 mm auf Pappkarton aufgetragen und im Normklima ("NK"; 23±1 °C, 50±5% relative Luftfeuchtigkeit) die Zeit bestimmt, die es dauerte, bis beim leichten Antippen der Oberfläche der Zusammensetzung mittels einer Pipette aus LDPE erstmals keine Rückstände auf der Pipette mehr zurückblieben.

Die **Zugfestigkeit,** die **Bruchdehnung,** und der **Elastizitätsmodul** (E-Modul) wurden nach DIN EN 53504 (Zuggeschwindigkeit: 200 mm/min) bestimmt an Hanteln mit einer Länge von 75 mm, bei einer Steglänge von 30 mm und einer Stegbreite von 4 mm, welche durch Ausstanzen aus Filmen von ca. 3 mm Dicke der im Normklima ausgehärteten Zusammensetzung hergestellt wurden. Zur Prüfung der **Frühfestigkeit** wurde die Zugscherfestigkeit mittels folgender Methode gemessen: Für jede Messung wurden jeweils 2 KTL-lackierte Stahlplättchen von 0.75 mm Dicke, 45 mm Breite und 100 mm Länge (erhältlich von Rocholl GmbH, Schönbrunn, Deutschland) mit Isohexan entfettet. Nach einer Ablüftezeit von 10 Minuten wurden die Plättchen mit Hilfe einer passenden PTFE-Form im vertikalen Abstand von 2 mm so gegeneinander angeordnet, dass sie an den Kopfenden um 15 mm überlappten. Der Überlappungsbereich zwischen den Plättchen wurde mit Klebstoff befüllt, wobei dieser auf die entfetteten Seiten der Plättchen zu liegen kam. Die so gegeneinander verklebten Plättchen wurden bei 23 °C und 50% relativer Luftfeuchtigkeit gelagert, nach 2, bzw. 4, bzw. 24 Stunden mit Hilfe einer Zugprüfmaschine (Zwick) bei einer konstanten Querjochgeschwindigkeit von 10 mm/min nach DIN EN 1465 bis zum Bruch auseinander gezogen und die Bruchkraft in MPa (N/mm²) gemessen. Die angegebenen Werte sind Mittelwerte aus zwei Messungen.

### Feuchtigkeitshärtende Zusammensetzungen

Zusammensetzung ***Z1**:* Polyurethan-Scheibenklebstoff Sikaflex®-265 (erhältlich von Sika Schweiz AG).

Zusammensetzung ***Z2***: Komponente A des Montageklebstoffs Sikaflex®-553 auf Basis von silanterminiertem Polymer (erhältlich von Sika Schweiz AG).

### Herstellung von Härtern

Härter ***H1***: 68.5 Gewichtsteile Bisphenol A-Flüssigharz (Araldite® GY-250 von Huntsman) wurden bei 50°C mit 10 Gewichtsteilen Reaktivverdünner (Araldite® DY-E von Huntsman) und 1.5 Gewichtsteilen Emulgator (Disponil® 23 von Cognis) gemischt und anschliessend mit 20 Gewichtsteilen Wasser über einen Stator-Rotor-Mischer bei einer Drehgeschwindigkeit von 22 m/s kontinuierlich emulgiert. Die erhaltene weisse Emulsion war von cremiger Konsistenz, wies eine Viskosität bei 20°C von ca. 1100 mPa·s, einen Epoxidgruppengehalt von 4.08 mEq/g und eine mittlere Teilchengrösse von ca. 1.6 µm, mit 90% der Teilchen kleiner als 2.7 µm, auf und blieb bei Raumtemperatur während mehr als einem Jahr unverändert.

Härter ***H2*:** 68.5 Gewichtsteile Bisphenol A-Flüssigharz (Araldite® GY-250 von Huntsman) und 10 Gewichtsteile Bisphenol F-Flüssigharz (D.E.R.™ 354 von Dow Chemical) wurden bei 50°C mit 1.5 Gewichtsteilen Emulgator (Disponil® 23 von Cognis) gemischt und anschliessend mit 20 Gewichtsteilen Wasser über einen Stator-Rotor-Mischer bei einer Drehgeschwindigkeit von 22 m/s kontinuierlich emulgiert. Die erhaltene weisse Emulsion war von cremiger Konsistenz, wies eine Viskosität bei 20°C von ca. 1500 mPa·s, einen Epoxidgruppengehalt von 4.28 mEq/g, eine mittlere Teilchengrösse von ca. 1.5 µm, mit 90% der Teilchen kleiner als 2.6 µm, auf und blieb bei Raumtemperatur während mehr als einem Jahr unverändert.

Härter ***H3*:** Beschleunigerpaste Sika® Booster (erhältlich von Sika Schweiz AG).

Härter ***H4*:** Komponente B (Version L30) des Montageklebstoffs Sikaflex®-553 (erhältlich von Sika Schweiz AG).

### Herstellung von beschleunigt aushärtenden Zusammensetzungen

### Beispiele 1 bis 4 sowie Ref1 und Ref2

Für jedes Beispiel wurden gemäss Tabelle 1 im Normklima eine feuchtigkeitshärtende Zusammensetzung als Komponente **A** mit einem Härter als Komponente **B** im angegebenen Gewichtsverhältnis mittels eines dynamischen Mischers vermischt, unmittelbar darauf appliziert und im Normklima ausgehärtet.

**Tabelle 1: Beschleunigt aushärtende Zusammensetzungen. (Mengen in Gewichtsteilen)**

| Beispiel | ***Ref1*** | ***1*** | ***Ref2*** | ***2*** | ***3*** | ***4*** |
|---|---|---|---|---|---|---|
| *Komponente A:* | | | | | | |
| Zusammensetzung ***Z1*** | 100 | 100 | - | - | - | - |
| Zusammensetzung ***Z2*** | - | - | 100 | 100 | 100 | 100 |

| *Komponente B:* | | | | | | |
|---|---|---|---|---|---|---|
| Härter ***H1*** | - | - | - | 2.5 | - | - |
| Härter ***H2*** | - | 2 | - | - | 2.5 | 10 |

Die so erhaltenen Zusammensetzungen wurden auf Standfestigkeit, Fadenzug, Zeit bis zur Klebefreiheit und auf mechanische Eigenschaften nach 7 Tagen Aushärtung im Normklima sowie zusätzlich nach 7 Tagen Lagerung bei 70 °C geprüft.

Die Ergebnisse dieser Prüfungen sind in der Tabelle 2 aufgeführt.

**Tabelle 2: Eigenschaften der Zusammensetzungen.**

| Beispiel | ***Ref1*** | ***1*** | ***Ref2*** | ***2*** | ***3*** | ***4*** |
|---|---|---|---|---|---|---|
| Standfestigkeit | gut | sehr gut | gut | sehr gut | sehr gut | sehr gut |
| Fadenzug (mm) | 7 | 3 | 6 | 3 | 3 | 2 |
| Klebefreiheit^{a} (min.) | 60 | 38 | 30 | 30 | 32 | 41 |

| *Mechanische Eigenschaften (7 Tage NK):* | | | | | | |
|---|---|---|---|---|---|---|
| Zugfestigkeit (MPa) | 8.4 | 7.0 | 2.4 | 2.5 | 2.5 | 3.1 |
| Bruchdehnung (%) | 500 | 450 | 270 | 280 | 260 | 500 |
| E-Modul (MPa) | 2.0^{b} | 2.4^{b} | 1.5^{c} | 1.5^{c} | 1.6^{c} | 1.0^{c} |

| *Mechanische Eigenschaften (7 Tage NK + 7 Tage 70 °C):* | | | | | | |
|---|---|---|---|---|---|---|
| Zugfestigkeit (MPa) | 8.9 | 8.3 | 2.5 | 2.7 | 2.7 | 3.3 |
| Bruchdehnung (%) | 560 | 610 | 230 | 260 | 220 | 380 |
| E-Modul (MPa) | 2.0^{b} | 2.2^{b} | 1.6^{c} | 1.6^{c} | 1.7^{c} | 1.5^{c} |

| | | | | | | |
|---|---|---|---|---|---|---|
| ^{a} Zeit bis zur Klebefreiheit. ^{b} bei 0.5 bis 5% Dehnung. ^{c} bei 0.5 bis 50% Dehnung. | | | | | | |

### Beispiele 5 und 6 sowie Ref3 bis Ref6

Für jedes Beispiel wurden gemäss Tabelle 3 im Normklima eine feuchtigkeitshärtende Zusammensetzung als Komponente **A** mit einem Härter als Komponente **B** im angegebenen Gewichtsverhältnis mittels eines dynamischen Mischers vermischt, unmittelbar darauf appliziert und im Normklima ausgehärtet.

**Tabelle 3: Beschleunigt aushärtende Zusammensetzungen. (Mengen in Gewichtsteilen)**

| Beispiel | ***Ref3*** | ***Ref4*** | ***5*** | ***Ref5*** | ***Ref6*** | ***6*** |
|---|---|---|---|---|---|---|
| *Komponente A:* | | | | | | |
| Zusammensetzung ***Z1*** | 100 | 100 | 100 | - | - | - |
| Zusammensetzung ***Z2*** | - | - | - | 100 | 100 | 100 |

| *Komponente B:* | | | | | | |
|---|---|---|---|---|---|---|
| Härter ***H2*** | - | - | 2 | - | - | 10 |
| Härter ***H3*** | - | 2 | - | - | - | - |
| Härter ***H4*** | - | - | - | - | 10 | - |

Die so erhaltenen Zusammensetzungen wurden auf Frühfestigkeit geprüft. Die Ergebnisse dieser Prüfungen sind in der Tabelle 4 aufgeführt.

**Tabelle 4: Frühfestigkeit (in MPa) der Zusammensetzungen. (Mengen in Gewichtsteilen)**

| Beispiel | ***Ref3*** | ***Ref4*** | ***5*** | ***Ref5*** | ***Ref6*** | ***6*** |
|---|---|---|---|---|---|---|
| Frühfestigkeit nach 2 h | n.b. | 1.2 | 0.8 | n.b. | 0.3 | 0.2 |
| Frühfestigkeit nach 4 h | n.b. | 3.5 | 2.8 | n.b. | 0.8 | 0.5 |
| Frühfestigkeit nach 24 h | 1.4 | 4.9 | 4.1 | 0.3 | 1.8 | 1.5 |

| | | | | | | |
|---|---|---|---|---|---|---|
| n.b. = nicht bestimmt. | | | | | | |

## Patentansprüche

1. Verwendung einer wässrigen Emulsion von mindestens einem Epoxidharz als Härter für feuchtigkeitshärtende Zusammensetzungen.

2. Verwendung gemäss Anspruch 1, **dadurch gekennzeichnet, dass** die wässrige Emulsion von mindestens einem Epoxidharz 10 bis 40 Gew.-% Wasser aufweist.

3. Verwendung gemäss Anspruch 2, **dadurch gekennzeichnet, dass** die wässrige Emulsion von mindestens einem Epoxidharz 10 bis 30 Gew.-% Wasser aufweist.

4. Verwendung gemäss einem der Ansprüche 1 bis 3, **dadurch gekennzeichnet, dass** das Epoxidharz eine mittlere Teilchengrösse im Bereich von 0.05 bis 10 µm aufweist.

5. Verwendung gemäss einem der Ansprüche 1 bis 4, **dadurch gekennzeichnet, dass** die Emulsion eine Teilchengrössenverteilung aufweist, bei welcher das Grössenverhältnis der grössten zu den kleinsten Partikeln einen Wert im Bereich von ≤ 25 aufweist.

6. Verwendung gemäss einem der Ansprüche 1 bis 5, **dadurch gekennzeichnet, dass** 90% der Teilchen in der Emulsion kleiner sind als 6 µm.

7. Verwendung gemäss einem der Ansprüche 1 bis 6, **dadurch gekennzeichnet, dass** es sich bei der feuchtigkeitshärtenden Zusammensetzung um eine Zusammensetzung auf Basis von Isocyanatgruppen aufweisenden Polyurethanpolymeren oder um eine Zusammensetzung auf Basis von silanfunktionellen Polymeren handelt.

8. Verfahren zur zumindest teilweisen Aushärtung einer feuchtigkeitshärtenden Zusammensetzung, wobei die feuchtigkeitshärtende Zusammensetzung mit dem durch einen der Ansprüche 1 bis 7 vorgegebenen Härter vermischt wird.

9. Zweikomponentige Zusammensetzung bestehend aus einer Komponente **A** umfassend
- mindestens eine feuchtigkeitshärtende Zusammensetzung, und einer Komponente **B** umfassend
- mindestens einen durch einen der Ansprüche 1 bis 7 vorgegebenen Härter, **dadurch gekennzeichnet, dass** das Gewichtsverhältnis der Komponente A zu Komponente B 100:0.5 bis 100:50, beträgt.

10. Zweikomponentige Zusammensetzung gemäss Anspruch 9, **dadurch gekennzeichnet, dass** das Gewichtsverhältnis der Komponente A zu Komponente B 100:0.5 bis 100:20, beträgt.

11. Zweikomponentige Zusammensetzung gemäss einem der Ansprüche 9 oder 10, **dadurch gekennzeichnet, dass** die feuchtigkeitshärtende Zusammensetzung ein feuchtigkeitshärtender Klebstoff, Dichtstoff oder eine feuchtigkeitshärtende Beschichtung ist.

12. Zweikomponentige Zusammensetzung gemäss einem der Ansprüche 9 bis 11, **dadurch gekennzeichnet, dass** die feuchtigkeitshärtende Zusammensetzung mindestens ein Isocyanatgruppen aufweisendes Polyurethanpolymer oder ein silanfunktionelles Polymer aufweist.

13. Zweikomponentige Zusammensetzung gemäss einem der Ansprüche 9 bis 12, **dadurch gekennzeichnet, dass** die Komponente **A** weiterhin mindestens einen Härter oder Beschleuniger für die Aushärtung des Epoxidharzes enthält.

14. Ausgehärtete Zusammensetzung erhalten aus einer zweikomponentigen Zusammensetzung gemäss einem der Ansprüche 9 bis 13 durch Mischen der Komponente **A** mit der Komponente **B.**

15. Verwendung einer zweikomponentigen Zusammensetzung gemäss einem der Ansprüche 9 bis 13 als Klebstoff, Dichtstoff oder Beschichtung.

## Claims

1. Use of an aqueous emulsion of at least one epoxy resin as curing agent for moisture-curing compositions.

2. Use according to claim 1, **characterized in that** the aqueous emulsion of at least one epoxy resin contains 10 to 40 wt% water.

3. Use according to claim 2, **characterized in that** the aqueous emulsion of at least one epoxy resin contains 10 to 30 wt% water.

4. Use according to any one of claims 1 to 3, **characterized in that** the epoxy resin has an average particle size in the range of 0.05 to 10 µm.

5. Use according to any one of claims 1 to 4, **characterized in that** the emulsion has a particle size distribution in which the size ratio of the largest particles to the smallest particles has a value in the range of ≤ 25.

6. Use according to any one of claims 1 to 5, **characterized in that** 90% of the particles in the emulsion are smaller than 6 µm.

7. Use according to any of claims 1 to 6, **characterized in that** the moisture-curing composition is a composition based on polyurethane polymers containing isocyanate groups or a composition based on silane-functional polymers.

8. Method for at least partially curing a moisture-curing composition, wherein the moisture-curing composition is mixed with the curing agent specified in any one of claims 1 to 7.

9. Two-component composition consisting of a component **A,** comprising
- at least one moisture-curing composition and a component **B,** comprising
- at least one curing agent specified in any one of claims 1 to 7, **characterized in that** the weight ratio of component A to component B is 100:0.5 to 100:50.

10. Two-component composition according to claim 9, **characterized in that** the weight ratio of component A to component B is 100:0.5 to 100:20.

11. Two-component composition according to either one of claims 9 and 10, **characterized in that** the moisture-curing composition is a moisture-curing adhesive, sealing agent or a moisture-curing coating.

12. Two-component composition according to any one of claims 9 to 10, **characterized in that** the moisture-curing composition contains at least one polyurethane polymer containing isocyanate groups or a silane-functional polymer.

13. Two-component composition according to any one of claims 9 to 12, **characterized in that** component **A** also contains at least one curing agent or accelerator for curing the epoxy resin.

14. Fully cured composition obtained from a two-component composition according to any one of claims 9 to 13 by mixing component **A** with component **B.**

15. Use of a two-component composition according to any one of claims 9 to 13 as an adhesive, sealing agent or coating.

## Revendications

1. Utilisation d'une émulsion aqueuse d'au moins une résine époxyde en tant qu'agent de durcissement pour des compositions durcissant à l'humidité.

2. Utilisation selon la revendication 1, **caractérisée en ce que** l'émulsion aqueuse d'au moins une résine époxyde comprend 10 à 40 % en poids d'eau.

3. Utilisation selon la revendication 2, **caractérisée en ce que** l'émulsion aqueuse d'au moins une résine époxyde comprend 10 à 30 % en poids d'eau.

4. Utilisation selon l'une quelconque des revendications 1 à 3, **caractérisée en ce que** la résine époxyde présente une taille de particule moyenne dans la plage allant de 0,05 à 10 µm.

5. Utilisation selon l'une quelconque des revendications 1 à 4, **caractérisée en ce que** l'émulsion présente une distribution des tailles de particules selon laquelle le rapport de tailles entre les particules les plus grandes et les particules les plus petites présente une valeur dans la plage ≤ 25.

6. Utilisation selon l'une quelconque des revendications 1 à 5, **caractérisée en ce que** 90 % des particules dans l'émulsion ont une taille inférieure à 6 µm.

7. Utilisation selon l'une quelconque des revendications 1 à 6, **caractérisée en ce que** la composition durcissant à l'humidité consiste en une composition à base de polymères de polyuréthane comprenant des groupes isocyanate ou en une composition à base de polymères à fonction silane.

8. Procédé pour le durcissement au moins partiel d'une composition durcissant à l'humidité, dans lequel la composition durcissant à l'humidité est mélangée avec l'agent de durcissement indiqué dans l'une quelconque des revendications 1 à 7.

9. Composition bicomposante constituée par un composant **A** comprenant :
- au moins une composition durcissant à l'humidité, et un composant **B** comprenant :
- au moins un agent de durcissement indiqué dans l'une quelconque des revendications 1 à 7, **caractérisée en ce que** le rapport en poids entre le composant A et le composant B est de 100:0,5 à 100:50.

10. Composition bicomposante selon la revendication 9, **caractérisée en ce que** le rapport en poids entre le composant A et le composant B est de 100:0,5 à 100:20.

11. Composition bicomposante selon l'une quelconque des revendications 9 ou 10, **caractérisée en ce que** la composition durcissant à l'humidité est un adhésif durcissant à l'humidité, un agent d'étanchéité ou un revêtement durcissant à l'humidité.

12. Composition bicomposante selon l'une quelconque des revendications 9 à 11, **caractérisée en ce que** la composition durcissant à l'humidité comprend au moins un polymère de polyuréthane comprenant des groupes isocyanate ou un polymère à fonction silane.

13. Composition bicomposante selon l'une quelconque des revendications 9 à 12, **caractérisée en ce que** le composant **A** contient en outre au moins un agent de durcissement ou un accélérateur pour le durcissement de la résine époxyde.

14. Composition durcie obtenue à partir d'une composition bicomposante selon l'une quelconque des revendications 9 à 13 par mélange du composant **A** avec le composant **B.**

15. Utilisation d'une composition bicomposante selon l'une quelconque des revendications 9 à 13 en tant qu'adhésif, agent d'étanchéité ou revêtement.
